# EUROPEAN PATENT APPLICATION

(11) **EP 4 818 008 A1**
(43) Date of publication of application: **07.10.2026**
(21) Application number: 26161184.2
(22) Date of filing: 27.02.2026
(51) Int. Cl.: B62D 35/00, B62D 37/02, B62D 35/02

(54) **VEHICLE**

(30) Priority: 31.03.2025 JP 2025059485
(71) Applicant: MAZDA MOTOR CORPORATION, Hiroshima 730-8670 (JP)
(72) Inventor: Michiya, Mizokane, Aki-gun, Hiroshima, 730-8670 (JP); Takamasa, Aoki, Aki-gun, Hiroshima, 730-8670 (JP); Katsuya, Miyamoto, Aki-gun, Hiroshima, 730-8670 (JP)
(74) Representative: Lorenz Seidler Gossel Part. mbB

(57) **Abstract**

[Problem]

To provide a vehicle that can reduce kinetic energy loss through a configuration in which air impinges straight on front wheels in the front-rear direction during traveling.

[Means for Solution]

A vehicle includes a pair of left and right front wheels 11 and an undercover 12. The undercover 12 is disposed at a position forward of the front wheels 11 in the front-rear direction, and between the front wheels 11 in the vehicle width direction, the undercover 12 being provided to cover a bottom surface of a vehicle body. The undercover 12 includes a rear part (bottom flat part) 12b that is a part between a rear edge portion 12e and a front part 12a, a bottom surface 12c of the rear part 12b being parallel to a road surface.

## Description

### [Technical Field]

The present invention relates to a vehicle, and particularly to the structure of a front lower portion of a vehicle.

### [Background Art]

There is a demand that vehicles reduce vortices which are generated during traveling to reduce kinetic energy loss. During traveling of a vehicle, there may be cases in which air also flows into the space below the vehicle from a gap between a front bumper and the road surface and vortices are generated in the space below the vehicle, thus causing kinetic energy loss. Patent Literatures 1 to 3 disclose structures intended to suppress such generation of vortices in the space below the vehicle.

Patent Literatures 1, 2 disclose vehicles that include an undercover disposed to extend from the lower portion of the front end of a front bumper to an area in the vicinity of the rear end of a front wheel. The undercover has a structure in which a front cover part and a rear cover part are coupled together, the front cover part being disposed forward of the front end portion of a wheel house, the rear cover part being disposed rearward of the front end portion of the wheel house. The undercover is coupled to an actuator, and is configured such that the state of the undercover can be changed between a retracted state, in which the coupling part between the front cover part and the rear cover part are lifted upward, and a deployed state, in which the coupling part is lowered downward. With the undercover in the deployed state, the front cover part is inclined such that the height of the front cover part increases as the front cover part extends forward from the coupling part, whereas the rear cover part is inclined such that the height of the rear cover part increases as the rear cover part extends rearward from the coupling part.

Patent Literature 3 discloses a vehicle that includes straightening members (undercovers) and an air actuator, the straightening members being disposed on the left and right sides in the vehicle width direction, the air actuator being configured to lift/lower the straightening members. The respective straightening members are disposed in front of left and right front wheels. The straightening members are provided such that, when the straightening members are brought into the lowered state by the air actuator, the lower surface of each straightening member has a curved surface in which the height of the lower surface decreases as the lower surface extends from the front side toward the lower side.

### [Citation List]

### [Patent Literature]

[Patent Literature 1] Japanese Patent Laid-Open No. 2023-10984
[Patent Literature 2] U.S. Patent Application Publication No. 2023/009904
[Patent Literature 3] Japanese Patent Laid-Open No. 2007-30549

### [Summary of Invention]

### [Problems to be Solved by the Invention]

However, the structures disclosed in the above-mentioned Patent Literatures 1 to 3 have room for improvement to reduce kinetic energy loss during traveling of the vehicle. That is, during traveling of the vehicle, air flowing through the space below the vehicle impinges on the tire treads at the front ends of the front wheels. However, it is deemed that the structures disclosed in Patent Literatures 1 to 3 do not sufficiently suppress generation of vortices in the vicinity of the front ends of the front wheels.

Specifically, in the structures disclosed in Patent Literatures 1 to 3, the undercover is provided such that, in the deployed state, the gap between the undercover and the road surface gradually decreases from the front side of the vehicle toward the front ends of the front wheels, so the pressure of air is high at the portion directly in front of the front wheels. Therefore, in the above-mentioned structures disclosed in Patent Literatures 1 to 3, air flowing through the gap between the undercover and the road surface does not impinge straight on the front ends of the front wheels (tire treads) in the front-rear direction, but impinges on the front ends of the front wheels from an oblique direction. Therefore, in the structures disclosed in Patent Literatures 1 to 3, vortices are generated in the vicinity of the front ends of the front wheels during traveling, and hence the structures have room for improvement to reduce kinetic energy loss.

The present invention has been made to solve the above-mentioned problem, and it is an object of the present invention to provide a vehicle that can reduce kinetic energy loss through a configuration in which air impinges straight on front wheels in the front-rear direction during traveling.

### [Means for Solving the Problems]

A vehicle according to one aspect of the present invention includes a pair of left and right front wheels and an undercover. The pair of left and right front wheels are disposed at opposite end portions of a front part of the vehicle in a vehicle width direction. The undercover is disposed at a position forward of the pair of left and right front wheels in a front-rear direction of the vehicle, and between the pair of left and right front wheels in the vehicle width direction, the undercover being provided to cover a bottom surface of a vehicle body.

In the vehicle according to the present aspect, the undercover includes a bottom flat part that is a part extending forward from a rear edge portion of the undercover, a bottom surface of the bottom flat part being parallel to a road surface.

The vehicle according to the above-mentioned aspect includes the undercover including the bottom flat part. The bottom flat part of the undercover is a part that is parallel to the road surface. Therefore, during traveling of the vehicle according to the above-mentioned aspect, the pressure of air flowing rearward through a space between the bottom surface of the bottom flat part of the undercover and the road surface decreases as the air flows toward the rear edge portion of the bottom flat part. Accordingly, during traveling of the vehicle that includes the undercover including the bottom flat part, air impinges straight on the front wheels in the front-rear direction and hence, it is possible to reduce kinetic energy loss.

Note that the term "parallel" above includes not only a case in which the bottom surface of the bottom flat part of the undercover is completely parallel to the road surface, but also a case in which the bottom surface of the bottom flat part of the undercover is inclined with respect to the road surface at a slight angle (for example, within 2 degrees). The same applies hereinafter.

The vehicle according to the above-mentioned aspect may further include a front bumper disposed forward of the pair of left and right front wheels, and provided at a front end of the vehicle to extend in the vehicle width direction. In this case, the undercover may further include a front part that is continuous with a front end of the bottom flat part, and that is provided to extend to a vicinity of a front end of the front bumper. The front part of the undercover may be formed to have a smooth curved surface such that a bottom surface of the front part is gradually displaced upward as the bottom surface approaches the vicinity of the front end of the front bumper from a position at which the front part is continuous from the bottom flat part.

In the vehicle according to the above-mentioned aspect, the bottom surface of the front part of the undercover is formed to have a smooth curved surface and hence, air introduced into the space below the front bumper is introduced into the space below the bottom flat part along the bottom surface of the front part. Therefore, the vehicle according to the above-mentioned aspect is suitable for reducing kinetic energy loss during traveling, compared with a case in which a stepped portion or the like is provided at the front portion of the bottom flat part of the undercover.

In the vehicle according to the above-mentioned aspect, the smooth curved surface of the front part may have a curvature radius in a range of 30 mm to 70 mm. This specific range for the curvature radius is particularly effective for guiding air that is introduced into the space below the front bumper smoothly into the space below the bottom flat part. It ensures that the airflow remains attached to the surface of the undercover without separation, which is optimal for reducing turbulence and minimizing kinetic energy loss.

In the vehicle according to the above-mentioned aspect, the front part of the undercover may include front corner portions on both sides in the vehicle width direction, the front corner portions having an arc shape.

The vehicle according to the above-mentioned aspect is suitable for reducing kinetic energy loss during traveling because air smoothly flows from the front part of the undercover toward both sides in the vehicle width direction along the front corner portions having an arc shape during traveling. Preferably, the front corner portions of the undercover may have a curvature radius in a range of 20 mm to 200 mm. This range provides an effective arc shape that allows air to flow smoothly from the front part of the undercover toward both sides in the vehicle width direction. This smooth lateral airflow management further contributes to the overall reduction of aerodynamic drag and kinetic energy loss during traveling.

It is preferable that the vehicle according to the above-mentioned aspect have a configuration that allows at least the bottom flat part of the undercover to be moved in an up-down direction.

With this configuration, at least the bottom flat part of the undercover moves upward and downward. Accordingly, even when there is a possibility of the undercover interfering with the road surface due to traveling of the vehicle on a road surface with large undulations, at least the bottom flat part of the undercover can move upward to suppress deformation and damage of the undercover.

The vehicle according to the above-mentioned aspect may further include a drive part configured to move the undercover upward and downward and, when the undercover is in a deployed state in which the undercover is lowered by the drive part, the bottom surface of the bottom flat part may be parallel to a road surface.

In the vehicle according to the above-mentioned aspect, the bottom flat part of the undercover is parallel to the road surface when the undercover is in the above-mentioned deployed state. Therefore, during traveling of the vehicle according to the above-mentioned aspect, the pressure of air flowing rearward through a space between the bottom surface of the bottom flat part of the undercover and the road surface decreases as the air flows toward the rear edge portion of the bottom flat part. Accordingly, during traveling of the vehicle, which includes the undercover including the bottom flat part, with the undercover in the deployed state, air impinges straight on the front wheels in the front-rear direction and it is possible to reduce kinetic energy loss.

The vehicle according to the above-mentioned aspect includes the drive part configured to move the undercover upward and downward. Hence, when the vehicle travels on a road surface with large irregularities, or when the undercover and portions around the undercover are in a frozen state due to low temperature, the vehicle can travel with the undercover maintained in a lifted state, without the undercover being lowered. Accordingly, the vehicle according to the above-mentioned aspect can suppress deformation and damage of the undercover and the portions around the undercover caused due to traveling or by the upward and downward movement of the undercover.

In the vehicle according to the above-mentioned aspect, the vehicle may further include a controller. The controller acquires vehicle information for the vehicle, and issues a command indicating whether to lift or lower the undercover to the drive part based on the vehicle information acquired.

The vehicle according to the above-mentioned aspect includes a controller that issues a lifting/lowering command to the drive part based on the acquired vehicle information. Hence, it can reduce kinetic energy loss by lowering the undercover under conditions that allow the lowering, and also suppress deformation and damage of the undercover and portions around the undercover by lifting the undercover when conditions are not met. Accordingly, compared with a case in which the driver issues a lifting/lowering command to the drive part, the vehicle according to the above-mentioned aspect is suitable for reliably reducing kinetic energy loss, and for suppressing deformation and damage of the undercover and the portions around the undercover.

In the vehicle according to the above-mentioned aspect, the drive part may comprise an actuator and a link mechanism part that couples the actuator to the undercover. This configuration provides a simple and reliable mechanical means for moving the undercover upward and downward.

In the vehicle according to the above-mentioned aspect, the vehicle information acquired by the controller may include at least one of outside air temperature information and vehicle speed information. Using outside air temperature allows the controller to assess the risk of freezing conditions. Using vehicle speed allows the controller to determine if the vehicle is traveling at a speed where the aerodynamic benefit is significant.

In the vehicle according to the above-mentioned aspect, the controller may be configured to issue a command to lower the undercover to the deployed state when an acquired outside air temperature is equal to or more than a predetermined temperature and an acquired vehicle speed is equal to or higher than a predetermined speed. This specific control logic ensures that the undercover is deployed only under conditions deemed both safe and effective. It prevents deployment at low speeds or in potential freezing weather, thereby protecting the undercover and its drive part from damage, while ensuring it is used to reduce kinetic energy loss when the benefit is greatest, such as during high-speed travel in fair weather.

In the vehicle according to the above-mentioned aspect, the rear edge portion of the undercover may have a straight shape extending along the vehicle width direction. By forming the rear edge portion to be straight, the air low can be further optimized.

The vehicle according to the above-mentioned aspect may further include a power train undercover disposed rearward of the undercover, wherein a bottom surface of the undercover at the rear edge portion is located at a substantially same height position as a bottom surface of the power train undercover. This configuration creates a continuous, smooth bottom surface from the undercover to the power train undercover.

In the vehicle according to the above-mentioned aspect, the undercover may further include a fixed frame and a deformable member, the fixed frame being fixed to the bottom surface of the vehicle body, the deformable member being deformable and coupling at least a front end portion of the bottom flat part to the fixed frame. The deformable member is made of a material softer than the bottom flat part, and is configured to allow the bottom flat part to move upward by deforming when the bottom flat part interferes with a road surface.

In the vehicle according to the above-mentioned aspect, when the bottom flat part of the undercover interferes with the road surface, the undercover allows the bottom flat part to move upward via deformation of the deformable member, which couples the front end portion of the undercover to the fixed frame. Consequently, it is possible to suppress deformation and damage of the undercover and portions around the undercover.

In the vehicle according to the above-mentioned aspect, a rear end portion of the bottom flat part may be fixed to the fixed frame, and the deformable member may couple a front end portion and side end portions of the bottom flat part to the fixed frame, such that the bottom flat part is supported in a cantilever state. This cantilevered structure provides a simple yet effective passive safety mechanism. When the front of the bottom flat part interferes with a road surface, it can pivot upward around the fixed rear end portion, causing the deformable member to deform. This allows the bottom flat part to move upward to avoid damage without requiring an active drive system.

### [Advantageous Effects of Invention]

In the vehicle according to the above-mentioned respective aspects, air impinges straight on the front wheels in the front-rear direction during traveling and hence it is possible to reduce kinetic energy loss by suppressing generation of vortices in the vicinity of the front ends of the front wheels.

### [Brief Description of Drawings]

FIG. 1 is a perspective view showing a front lower portion of a vehicle according to an embodiment of the present invention.
FIG. 2 is a bottom view showing the front lower portion of the vehicle.
FIG. 3 is a schematic view showing a structure related to movement of an undercover.
FIG. 4(a) is a side view showing a deployed state in which the undercover is lowered, and FIG. 4(b) is a side view showing a retracted state in which the undercover is lifted.
FIG. 5 is a side view for illustrating the arrangement position and the shape of the undercover.
FIG. 6 is a bottom view for illustrating the shape of the undercover.
FIG. 7 is a cross-sectional view for illustrating the positional relationship between the undercover in the deployed state and a PT cover.
FIG. 8(a) is a schematic view showing the undercover in the deployed state of the vehicle according to the embodiment, FIG. 8(b) is a graph showing pressure change in the front-rear direction in a space below the undercover, and FIG. 8(c) is a schematic view for illustrating air flow at the front lower portion of the vehicle.
FIG. 9(a) is a schematic view showing an undercover in the deployed state of a vehicle according to a comparison example, FIG. 9(b) is a graph showing pressure change in the front-rear direction in a space below the undercover, and FIG. 9(c) is a schematic view for illustrating air flow at the front lower portion of the vehicle.
FIG. 10 is a perspective view showing a main part of a vehicle according to another embodiment of the present invention, that is, an undercover and an area around the undercover, as viewed from the oblique left front lower side.
FIG. 11 is an enlarged perspective view of the undercover shown in FIG. 10, as viewed from the right front lower side.
FIG. 12 is a bottom view of a left part of the undercover shown in FIG. 1.
FIG. 13 is a side view of a front part of a left side surface of the undercover shown in FIG. 1.
FIG. 14 is a perspective view showing a front lower portion of a vehicle according to a still another embodiment of the present invention.

### [Mode for carrying out the Invention]

An embodiment of the present invention will be now described with reference to drawings. Modes described hereinafter are merely given as examples of the present invention, and the present invention is not limited at all to the following modes except for essential configurations.

In drawings used in the description made hereinafter, "FR" indicates the front side of the vehicle, "RR" indicates the rear side of the vehicle, "LH" indicates the left side of the vehicle, "RH" indicates the right side of the vehicle, "UP" indicates the upper side of the vehicle, and "LO" indicates the lower side of the vehicle.

### 1. Structure of front lower portion of vehicle 1

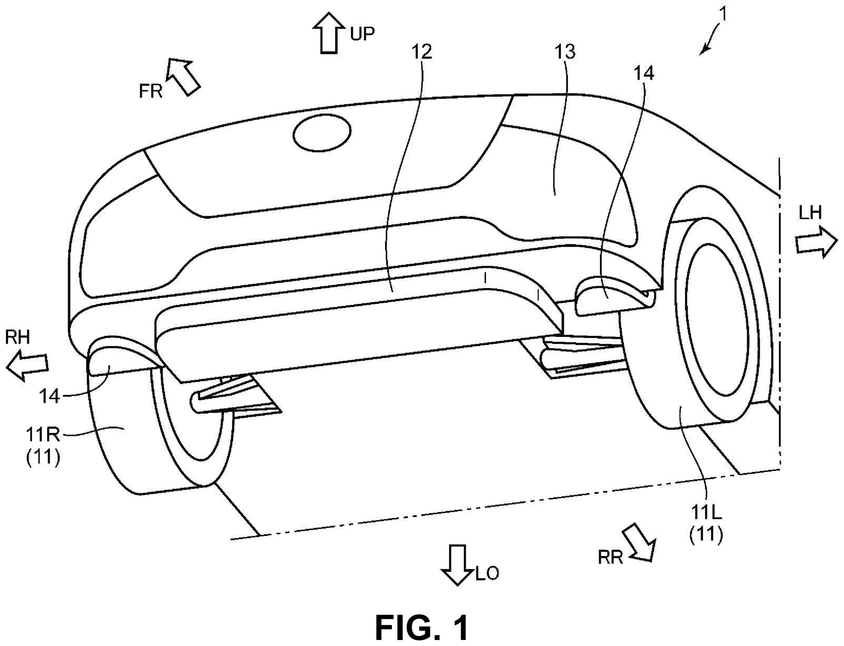

The structure of the front lower portion of a vehicle 1 according to the present embodiment will be described with reference to FIGS. 1 to 3.

As shown in FIG. 1, the vehicle 1 includes, at the front lower portion thereof, a pair of left and right front wheels 11 (a left front wheel 11L, a right front wheel 11R), an undercover 12, a front bumper 13, and a pair of left and right deflectors 14. The pair of left and right front wheels 11 are disposed at opposite end portions of the front part of the vehicle 1 in the vehicle width direction.

The front bumper 13 is disposed forward of the pair of left and right front wheels 11, and is provided to extend in the vehicle width direction at the front end of the vehicle 1. The undercover 12 is disposed in a region located forward of the pair of left and right front wheels 11 in the front-rear direction, and between the left front wheel 11L and the right front wheel 11R in the vehicle width direction. The undercover 12 is provided in the region to cover the bottom surface of the vehicle body. In the present embodiment, the undercover 12 is made of a resin material (polypropylene (PP), for example).

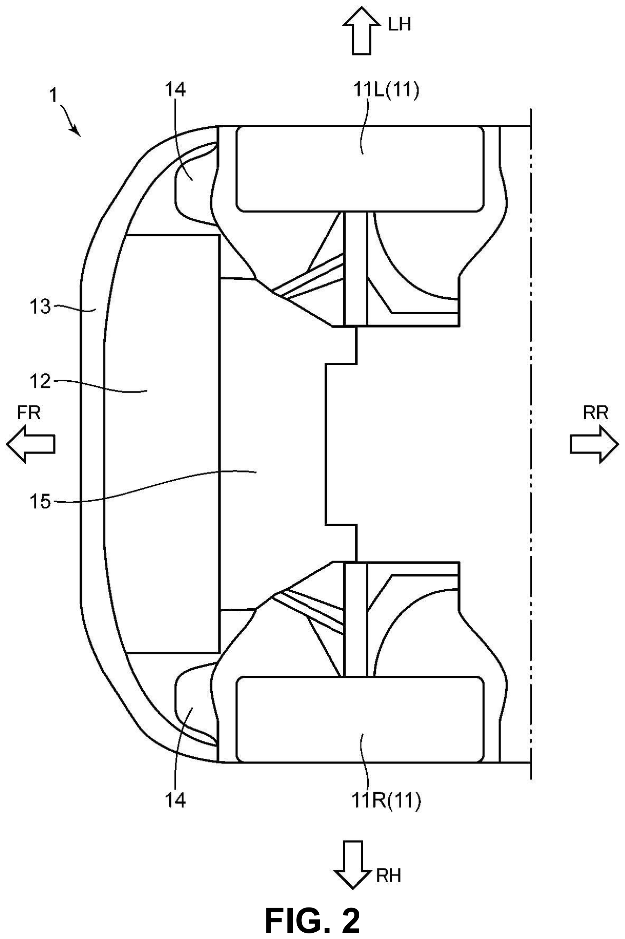

Each of the pair of left and right deflectors 14 is disposed directly in front of the front wheel 11. As shown in FIG. 2, the deflectors 14 are disposed on both vehicle-width-direction outer sides relative to the undercover 12. In the present embodiment, the deflectors 14 are made of elastomer, for example.

As shown in FIG. 2, the vehicle 1 further includes a power train undercover (PT cover) 15 disposed in a region located rearward of the undercover 12, and between the left front wheel 11L and the right front wheel 11R. The PT cover 15 is provided to cover the lower side of a power train (for example, an engine or a traveling motor) mounted in a power train room.

As will be described below, the vehicle 1 of the present embodiment has the following configuration in which the undercover 12 is movable in the up-down direction. It is sufficient for the vehicle 1 to have a configuration in which at least a bottom flat part (rear part 12b) is movable in the up-down direction.

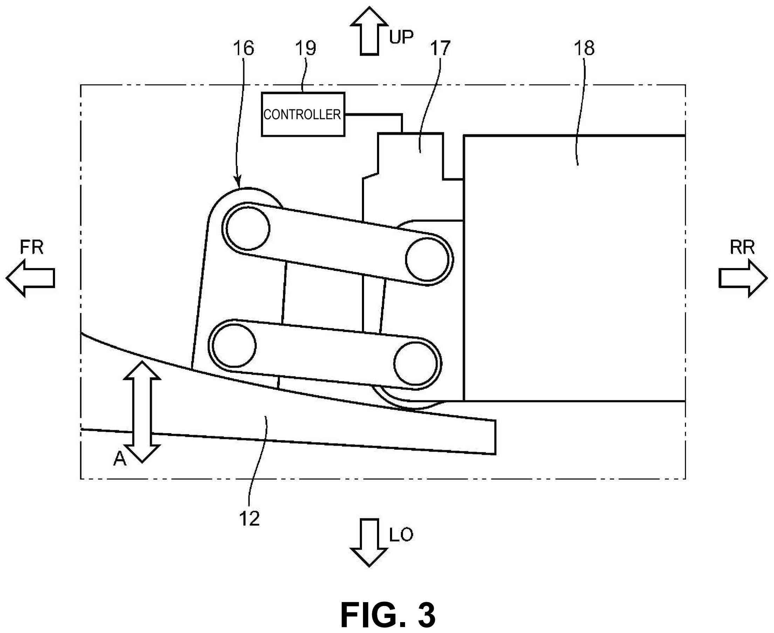

To be more specific, as shown in FIG. 3, the vehicle 1 includes an actuator 17, and a link mechanism part 16 that couples the actuator 17 to the undercover 12. The actuator 17 and the link mechanism part 16 constitute a drive part that moves the undercover 12 upward and downward. The actuator 17 is fixed to a perimeter frame 18.

The undercover 12 is configured to be movable upward and downward as shown by arrow A when the actuator 17 is driven. A configuration related to the drive control for the actuator 17 will be described later.

### 2. Upward and downward movement of undercover 12

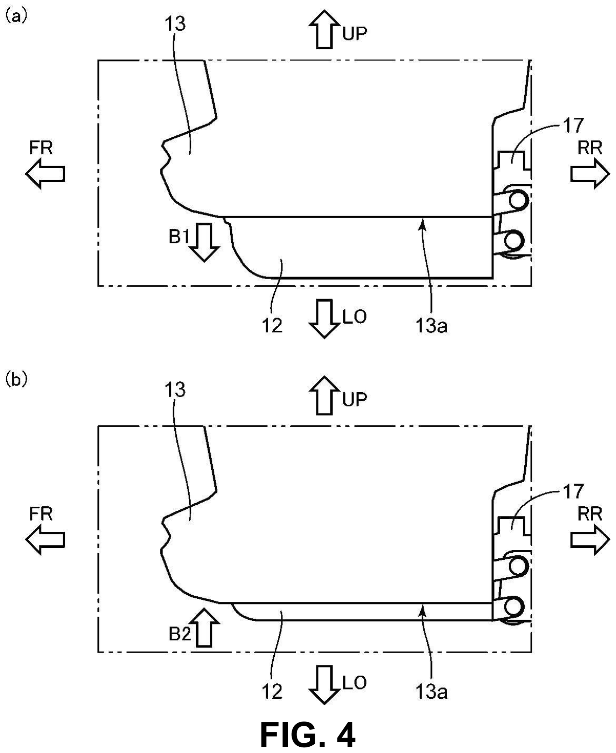

The undercover 12 is configured to be capable of being lifted/lowered by the drive part, which includes the actuator 17 as described above. In the vehicle 1 according to the present embodiment, the state of the undercover 12 can be changed between a deployed state, in which the undercover 12 is lowered, and a retracted state, in which the undercover 12 is lifted. The deployed state and the retracted state of the undercover 12 will be described with reference to FIG. 4.

As shown by arrow B1 in FIG. 4(a), the undercover 12 can take an attitude in which the undercover 12 protrudes downward beyond a lower edge 13a of the front bumper 13 (deployed state).

In contrast, as shown by an arrow B2 in FIG. 4(b), the undercover 12 can take an attitude in which at least a portion of the undercover 12 is housed in the front bumper 13 (retracted state). In the present embodiment, a mode in which a portion of the undercover 12 protrudes downward beyond the lower edge 13a of the front bumper 13 is taken as an example of the retracted state. However, a mode may be adopted in which the entire undercover 12 is lifted above the lower edge 13a of the front bumper 13.

### 3. Detailed structure of undercover 12

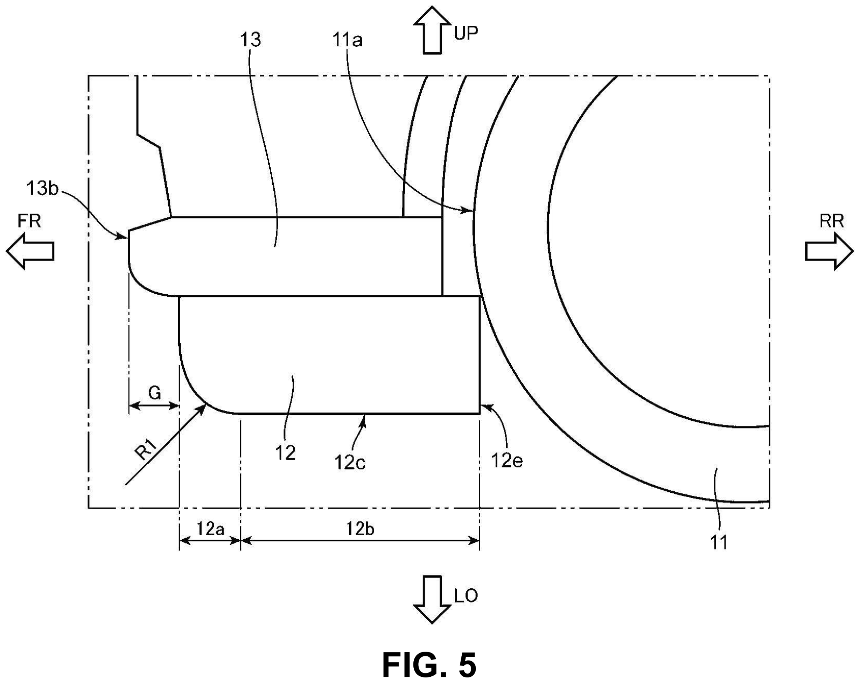

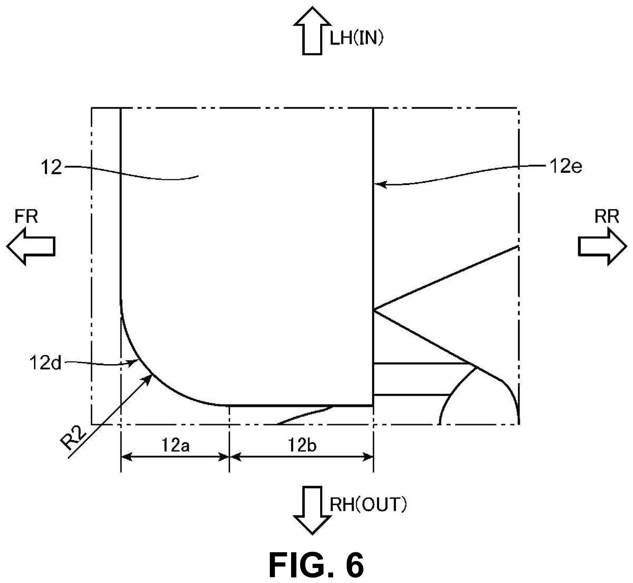

The detailed structure of the undercover 12 will be described with reference to FIGS. 5 and 6. FIG. 5 is a side view of the undercover 12 in the deployed state, as viewed from a side, and FIG. 6 is a bottom view of a portion of the undercover 12, as viewed from below.

As shown in FIG. 5, the undercover 12 is provided such that a front part 12a and the rear part 12b are continuous along the front-rear direction. In the deployed state, the rear part 12b of the undercover 12 is provided to extend forward from a rear edge portion 12e disposed at a position forward of a front end (the front end of a tire tread) 11a of the front wheel 11, and has a bottom surface 12c that is flat. The rear part 12b of the undercover 12 is provided such that the bottom surface 12c is parallel to the road surface in the deployed state. That is, the rear part 12b of the undercover 12 forms a bottom flat part.

The undercover 12 may be disposed such that the rear edge portion 12e of the undercover 12 is displaced rearward to the position of the rotation center of the front wheels 11 in the front-rear direction, within a range between the pair of left and right front wheels 11 in the vehicle width direction. In this case, in the range between the pair of left and right front wheels 11, the flat bottom surface 12c is allowed to extend rearward to the position of the rotation center of the front wheels 11. Consequently, the maximum length of the undercover 12 in the front-rear direction is a length (approximately 770 mm) from the front end of the front bumper 13 to the position of the rotation center of the front wheels 11. Thus, in the range between the pair of left and right front wheels 11, it is possible to sufficiently lower the pressure of air while allowing the air to flow straight rearward over a long distance.

Note that the term "parallel" above includes not only a case in which the bottom surface of the bottom flat part of the undercover is completely parallel to the road surface, but also a case in which the bottom surface of the bottom flat part of the undercover is inclined with respect to the road surface at a slight angle (for example, within 2 degrees). The same applies hereinafter.

The front part 12a of the undercover 12 is continuous with the rear part 12b, and is formed to have a smooth curved surface such that the bottom surface 12c of the front part 12a is gradually displaced upward as the bottom surface 12c of the front part 12a approaches the vicinity of a front end 13b of the front bumper 13 from the position at which the front part 12a is continuous from the rear part 12b. The front part 12a is provided to have a curvature radius R1, for example. In the present embodiment, the curvature radius R1 is, for example, 30 mm to 70 mm (preferably approximately 40 mm).

The undercover 12 is disposed such that, in the deployed state, the front end of the front part 12a is located at a position rearward of the front end 13b of the front bumper 13 by a dimension G. In the present embodiment, the dimension G is, for example, 70 mm to 90 mm.

As shown in FIG. 6, when the undercover 12 is viewed from below, the rear part 12b is provided such that the edge portions of the rear part 12b on the vehicle-width-direction outer side extend along the front-rear direction of the vehicle 1. The undercover 12 is provided such that the rear edge portion 12e has a straight shape extending along the vehicle width direction. That is, the rear edge portion 12e of the undercover 12 is formed to have a straight shape, without being inclined relative to the vehicle width direction, and without a portion thereof protruding rearward.

Front corner portions 12d of the front part 12a have an arc shape with a curvature radius R2. In the present embodiment, the curvature radius R2 is, for example, 20 mm to 200 mm (preferably approximately 30 mm).

When the length of the front part 12a in the front-rear direction is represented as L12a and the length of the rear part 12b in the front-rear direction is represented as L12b with the undercover 12 in the deployed state, the undercover 12 is provided such that L12a and L12b satisfy the following relationship.$300 \leq \left(L12a+L12b\right) \leq 500$ (1)

### 4. Height position of undercover 12 in deployed state

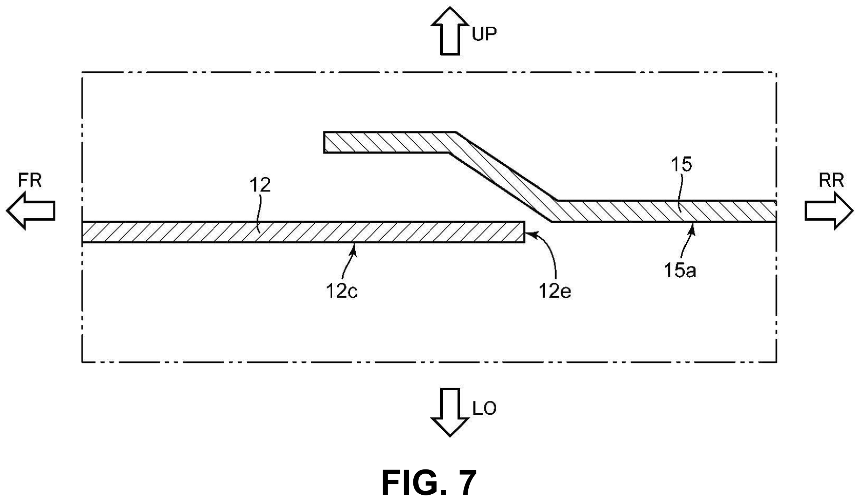

The height position of the undercover 12 in the deployed state will be described with reference to FIG. 7. FIG. 7 is a cross-sectional view schematically showing the undercover 12 in the deployed state and the PT cover 15 disposed behind the undercover 12.

As shown in FIG. 7, the undercover 12 in the deployed state is disposed such that, at the rear edge portion 12e, the bottom surface 12c is located at a substantially the same height position as a bottom surface 15a of the PT cover 15. However, a slight stepped portion may be present between the bottom surface 12c of the undercover 12 and the bottom surface 15a of the PT cover 15 in the height direction. For example, there may be a stepped portion having a thickness corresponding to the thickness of the undercover 12.

### 5. Control configuration related to movement of undercover 12

To perform control related to the movement (upward and downward movement) of the undercover 12, the vehicle 1 includes a controller 19 that performs a drive control for the actuator 17 as shown in FIG. 3. An example of the configuration will be briefly described.

The controller 19 is configured to include a microprocessor and a memory, the microprocessor including an MPU/CPU, an ASIC, a ROM, a RAM, and the like. The controller 19 executes, for example, firmware prestored in the memory to acquire outside air temperature information, vehicle speed information, and the like as vehicle information, and performs the drive control for the actuator 17, the outside air temperature information, the vehicle speed information, and the like being acquired from measuring means (an outside air temperature sensor, a vehicle speedometer, and the like) mounted in the vehicle.

That is, based on the acquired vehicle information, the controller 19 first determines whether to bring the undercover 12 into the deployed state (lowered state) or the retracted state (lifted state). For example, when the outside air temperature is equal to or more than a predetermined temperature and the vehicle speed is equal to or higher than a predetermined speed, the controller 19 determines to bring the undercover 12 into the deployed state. In cases other than the above (that is, in cases in which there is a possibility of interference of the undercover 12 with the road surface due to accumulation of snow or ice on the road surface, or due to traveling on a road surface with large undulations), the controller 19 determines to bring the undercover 12 into the retracted state. Based on the deployed state or the retracted state determined, the controller 19 performs the drive control for the actuator 17 (that is, the action of lowering or lifting the undercover 12).

### 6. Advantageous effects

The vehicle 1 according to the present embodiment includes the undercover 12 including the rear part 12b forming a bottom flat part. The rear part 12b of the undercover 12 is a part parallel to the road surface and, in the above-mentioned embodiment, is a part parallel to the road surface when the undercover 12 is in the deployed state. Therefore, during traveling of the vehicle 1 with the undercover 12 in the deployed state, the pressure of air flowing rearward through a space between the bottom surface 12c of the rear part 12b of the undercover 12 and the road surface decreases as the air flows toward the rear edge portion 12e of the undercover 12.

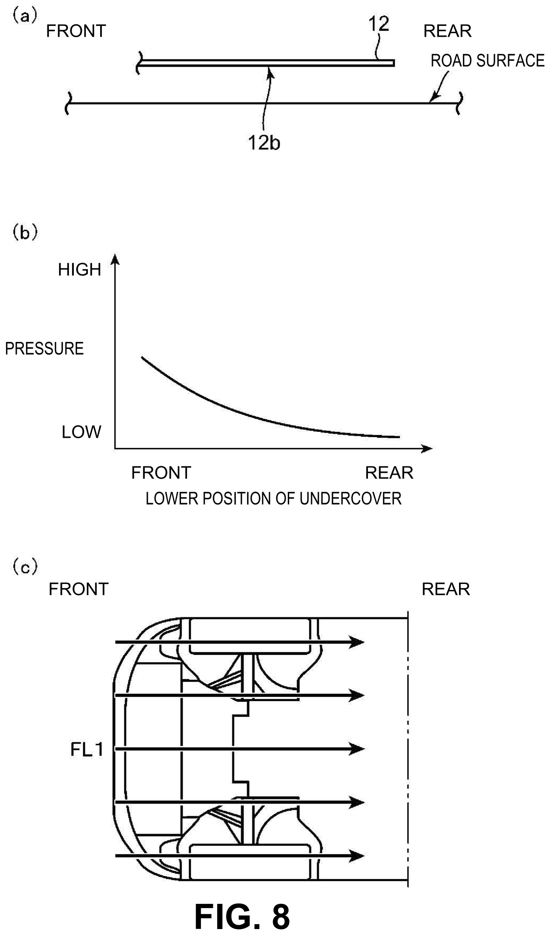

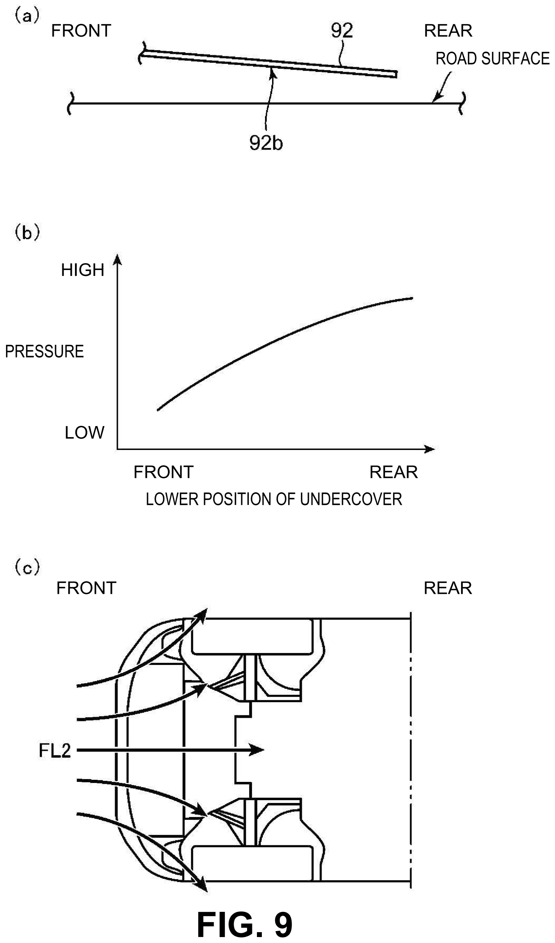

Accordingly, during traveling of the vehicle 1, which includes the undercover 12 including the rear part 12b forming the bottom flat part, with the undercover 12 in the deployed state, air impinges straight on the front wheels 11 along the front-rear direction and hence, it is possible to reduce kinetic energy loss. This will be described in detail with reference to FIGS. 8 and 9. FIG. 8 shows the pressure of air in the space below the undercover 12 of the vehicle 1 according to the present embodiment, and an air flow at the front lower portion of the vehicle. FIG. 9 shows the pressure of air in the space below an undercover 92 of a vehicle according to a comparison example, and the air flow at the front lower portion of the vehicle.

As shown in FIG. 9(a), the vehicle according to the comparison example includes the undercover 92 at the front lower portion thereof, the undercover 92 being inclined such that a gap between the bottom surface of a rear part 92b and the road surface decreases as the undercover 92 extends toward the rear side from the front side. As shown in FIG. 9(b), the pressure of air in the space below the undercover 92 increases as the air flows toward the rear side from the front side. Accordingly, in the vehicle according to the comparison example, air introduced from the front side deviates outward in the vehicle width direction as shown in FIG. 9(c), so that the air flowing obliquely outward impinges on the front wheels. This would likely generate vortices in the vicinity of the tire treads of the front wheels, thereby increasing kinetic energy loss.

In contrast, as shown in FIG. 8(a), the vehicle 1 according to the present embodiment includes the undercover 12 at the front lower portion thereof, the undercover 12 including the rear part 12b that is parallel to the road surface in the deployed state. As shown in FIG. 8(b), the pressure of air in the space below the undercover 12 decreases as the air flows toward the rear side from the front side. Accordingly, in the vehicle 1 according to the present embodiment, air introduced from the front side flows straight along the front-rear direction, and impinges straight on the front wheels 11 as shown in FIG. 8(c). Thus, generation of vortices near the front ends 11a of the front wheels 11 (in the vicinity of the tire treads) can be suppressed and hence it is possible to suppress kinetic energy loss during traveling to a low level.

The vehicle 1 according to the present embodiment includes the drive part (the actuator 17, the link mechanism part 16) that moves the undercover 12 upward and downward and hence, when the vehicle 1 travels on a road surface with large irregularities, or when the undercover 12 and portions around the undercover 12 are in a frozen state due to low temperature, the vehicle 1 can travel with the undercover 12 maintained in a lifted state, without the undercover 12 being lowered. Accordingly, the vehicle 1 can suppress deformation and damage of the undercover 12 and an area around the undercover 12 caused by traveling or by the upward and downward movement of the undercover 12.

The interpretation of "parallel" above is the same as the above-mentioned interpretation.

In the vehicle 1 according to the present embodiment, the bottom surface 12c of the front part 12a of the undercover 12 is formed to have a smooth curved surface. Hence, air introduced into the space below the front bumper 13 flows along the bottom surface 12c of the front part 12a, and is introduced into the space below the rear part (bottom flat part) 12b without separating from the rear part 12b. Therefore, the vehicle 1 is suitable for reducing kinetic energy loss during traveling, compared with a case in which a stepped portion or the like is provided at the front portion of the bottom flat part of the undercover.

The vehicle 1 according to the present embodiment includes the controller 19 that issues a lifting/lowering command to the actuator 17 based on the acquire vehicle information. Hence, it is possible to reduce kinetic energy loss by lowering the undercover 12 under conditions that allow the lowering, and it is also possible to suppress deformation and damage of the undercover 12 and portions around the undercover 12 by lifting the undercover 12 when conditions are not met. Accordingly, compared with the case in which the driver issues a lifting/lowering command to the actuator 17, the vehicle 1 is suitable for reliably reducing kinetic energy loss, and for suppressing deformation and damage of the undercover 12 and the portions around the undercover 12.

In the vehicle 1 according to the present embodiment, the controller 19 acquires outside air temperature information and vehicle speed information as vehicle information, and issues a lifting/lowering command to the actuator 17 based on the acquired information. Accordingly, when the outside air temperature is lower than the outside air temperature threshold and there is a risk of the road surface being frozen, or a risk of the undercover, the drive part, or the like being frozen, the undercover 12 is not lowered (is maintained in the retracted state) even if the vehicle speed is equal to or higher than the vehicle speed threshold. In addition, when the vehicle speed is lower than the vehicle speed threshold, it is presumed that the vehicle is traveling in an urban area or the like, and therefore the undercover 12 is not lowered (is maintained in the retracted state). Consequently, when the outside air temperature is lower than the outside air temperature threshold or the vehicle speed is lower than the vehicle speed threshold, the vehicle 1 can suppress deformation and damage of the undercover 12 and portions around the undercover 12 by maintaining the undercover 12 in the retracted state.

In contrast, when it is determined that the outside air temperature is equal to or more than the outside air temperature threshold, and the vehicle speed is equal to or higher than the vehicle speed threshold, the above-mentioned freezing or traveling in an urban area is not presumed and hence the vehicle 1 brings the undercover 12 into the deployed state. Consequently, it is possible to reduce kinetic energy loss.

In the vehicle 1 according to the present embodiment, a reference map may be stored in advance in a reference map storage unit of the controller, the outside air temperature threshold and the vehicle speed threshold being specified in the reference map. The controller 19 acquires outside air temperature information and vehicle speed information, and can determine whether to lift/lower the undercover 12 based on such information and the reference map.

As the vehicle 1 according to the present embodiment includes the drive part including the actuator 17 and the link mechanism part 16, it is possible to reduce manufacturing costs without adopting a special structure for lifting/lowering the undercover 12.

In the vehicle 1, the actuator 17 is fixed to the perimeter frame 18 and hence it is possible to reliably specify the respective height positions of the undercover 12 in lifted/lowered states relative to the lower surface of the vehicle 1. That is, the perimeter frame 18 is not moved relatively upward and downward relative to the framework member of the vehicle body and hence, fixing the actuator 17 to the perimeter frame 18 is suitable for specifying the reference position of the undercover 12 in the lifted/lowered state even when vibrations are applied during traveling.

Since the perimeter frame 18 is located at the front part of the vehicle 1 and is close to a position at which the undercover 12 is to be provided, it is unnecessary to provide a long bracket or the like between the actuator 17 and the perimeter frame 18 to fix the actuator 17. Therefore, it is possible to reliably fix the actuator 17 to the vehicle body.

As has been described above, in the vehicle 1 according to the present embodiment, the undercover 12 is lifted and hence, it is possible to suppress deformation and damage of the undercover 12 and portions around the undercover 12 during traveling. Further, the undercover 12 is lowered under conditions that allow the lowering and hence, it is possible to reduce kinetic energy loss during traveling by suppressing generation of vortices in the vicinity of the front ends 11a of the front wheels 11.

### [Modification]

The vehicle 1 according to the above-mentioned embodiment is configured such that the rear edge portion 12e of the undercover 12 is disposed forward of the front wheels 11. However, the present invention is not limited to such a configuration. For example, the undercover 12 may be disposed such that the rear edge portion 12e is located around the shaft part of the front wheels 11 in the front-rear direction.

The vehicle 1 according to the above-mentioned embodiment is configured such that the undercover 12 includes the front part 12a formed to have a curved surface. However, the present invention is not limited to such a configuration. Provided that air flowing in the space below the front lower portion of the vehicle 1 is guided to the rear part 12b of the undercover 12 without separating from the undercover 12, the undercover 12 may include a front part having a bottom surface that is a flat inclined surface. Further, the undercover 12 need not necessarily include the front part 12a.

The vehicle 1 according to the above-mentioned embodiment is configured such that the controller 19 acquires outside air temperature information and vehicle speed information as vehicle information, and determines whether to maintain the retracted state of the undercover 12 or to bring the undercover 12 into the deployed state based on the acquired vehicle information. However, the present invention is not limited to such a configuration. For example, the controller 19 may acquire navigation information instead of vehicle speed information. Consequently, the controller 19 can determine whether to lift or lower the undercover 12 by judging the state of the road surface registered in advance as navigation information.

The vehicle 1 may include, for example, a system that monitors the state of the road surface in front of the vehicle 1 (for example, a laser measuring instrument), and may use monitored data to determine the state of the road surface.

The vehicle according to the present invention need not necessarily include the controller 19. To be more specific, the driver driving the vehicle 1 may determine a road surface on which the vehicle 1 is to travel or determine the environment of a traveling route, and the driver may lift/lower the undercover 12.

The vehicle 1 according to the above-mentioned embodiment adopts the structure in which the actuator 17 is fixed to the perimeter frame 18. However, the present invention may be configured such that the actuator 17 is fixed to another portion. For example, the actuator 17 may be fixed to a front side member, a front cross member, or other members.

### [Another embodiment]

The above-mentioned embodiment shows the configuration in which the undercover 12 is brought into the retracted state, which is an upper position, or the deployed state, which is a lower position, depending on conditions such as the outside air temperature and the vehicle speed by moving the undercover 12 upward and downward with the actuator 17. However, the present invention is not limited to such a configuration. A configuration may be adopted in which the undercover 12 is fixed in the deployed state, which is the lower position. Also in such a case, air impinges straight on the front wheels in the front-rear direction during traveling and hence it is possible to reduce kinetic energy loss.

However, a new problem would occur in which the undercover 12 interferes with the road surface when the vehicle 1 travels on a road surface with large undulations in a state in which the undercover 12 is fixed in the deployed state, which is the lower position.

In view of the above, it is sufficient to adopt a structure in which at least the bottom flat part of the undercover 12 is moved upward and downward. Consequently, even when there is a possibility of the undercover 12 interfering with the road surface, at least the bottom flat part of the undercover 12 can move upward to suppress deformation and damage of the undercover 12.

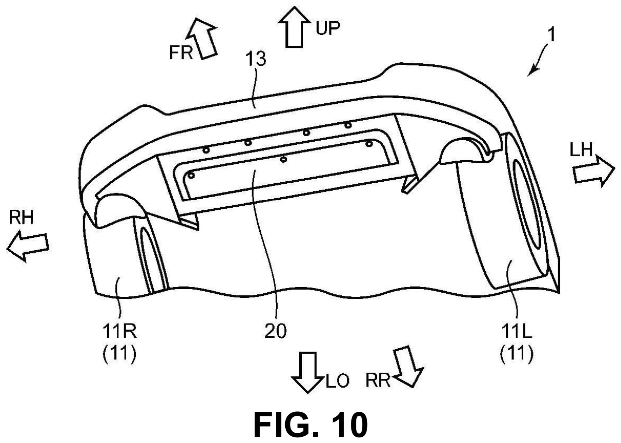

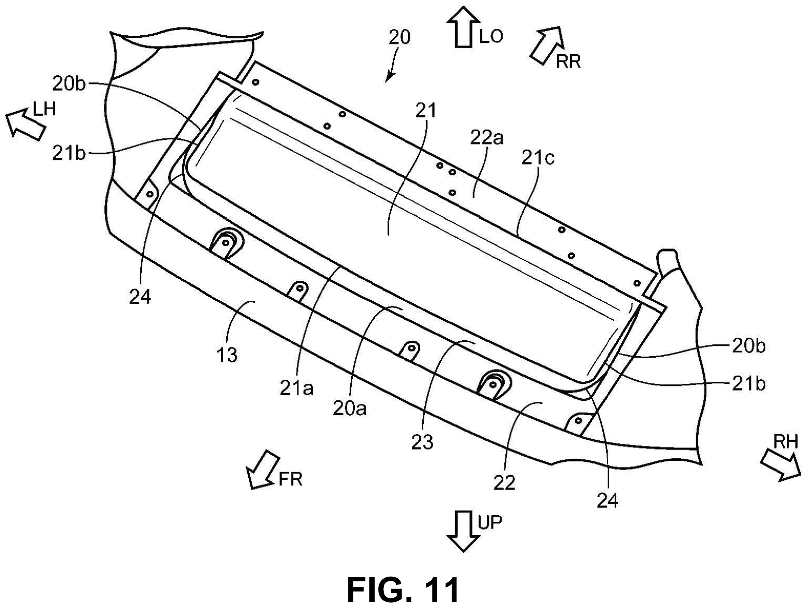

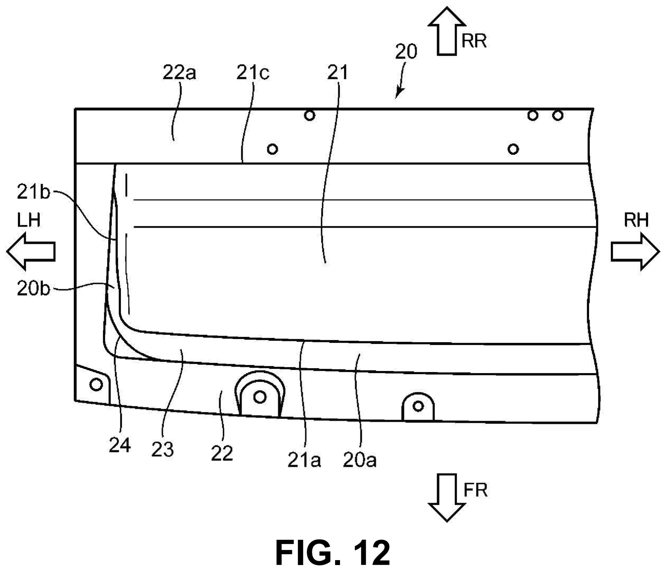

The configuration in which at least the bottom flat part of the undercover 12 is moved upward and downward is not limited to the configuration in which, as in the case of the above-mentioned embodiment, the entire undercover 12 is moved upward and downward by the actuator 17, but may be a configuration in which only a bottom flat part 21 is partially movable upward when the bottom flat part 21 interferes with the road surface, as in the case of an undercover 20 shown in FIGS. 10 to 14 described below.

That is, as shown in FIGS. 10 to 14, the undercover 20 according to another embodiment of the present invention further includes a fixed frame 22 and a deformable member 23 in addition to the bottom flat part 21 that is flat, and that is movable upward and downward, the fixed frame 22 being fixed to the bottom surface of the front bumper 13 as the bottom surface of the vehicle body, the deformable member 23 being deformable and coupling at least the front end portion of the bottom flat part 21 to the fixed frame 22.

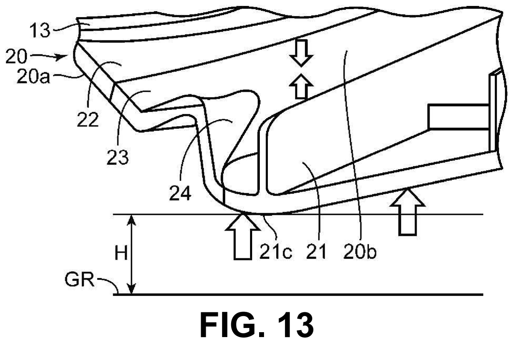

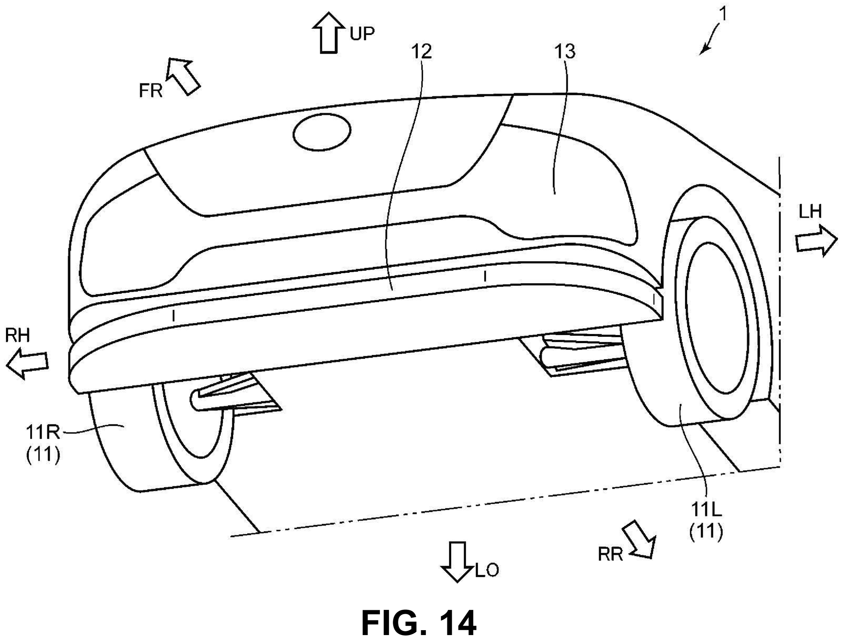

The bottom flat part 21 has a flat bottom surface extending substantially parallel to a road surface GR. To emphasize the position of a lowermost end 21c of the bottom flat part 21, the lowermost end 21c is illustrated in a protruding state at a corner in FIG. 13. A height H of the lowermost end 21c of the bottom flat part 21 from the road surface GR is set to a height that does not cause interference of the bottom flat part 21 with the road surface during traveling on a flat road surface, but that cause interference of the bottom flat part 21 with the road surface when there is an obstacle or a stepped portion having a predetermined height or more.

The deformable member 23 is a film-like body made of a material softer than the bottom flat part 21, and is configured to allow the bottom flat part 21 to move upward by deforming when the bottom flat part 21 interferes with the road surface. Specifically, the deformable member 23 is configured as described below.

First, a front end portion 21a of the bottom flat part 21, and portions of side end portions 21b, excluding a rear end portion 21c, are spaced apart from the fixed frame 22, the side end portions 21b being located on both sides in the vehicle width direction. In contrast, the rear end portion 21c of the bottom flat part 21 is fixed to the fixed frame 22 (to be more specific, a rear fixed part 22a fixed to the cross member or the like of the vehicle body). Accordingly, the bottom flat part 21 is partially supported such that the above-mentioned rear end portion 21c is supported on the fixed frame 22 in a cantilever state.

With the bottom flat part 21 being supported in a cantilever state as described above, the deformable member 23 at least uses the front end portion 21a as the front end portion of the bottom flat part 21, and couples the front end portion 21a and the portions of the side end portions 21b, excluding the rear end portion 21c, to the fixed frame 22, the side end portions 21b being located on both sides. Consequently, as shown in FIG. 13, when the bottom flat part 21 moves upward due to interference with the road surface, the deformable member 23 is deformed in a direction in which the deformable member 23 is compressed in the up-down direction, so that the deformable member 23 allows the bottom flat part 21 to move upward.

In the vehicle according to the above-mentioned aspect, when the bottom flat part 21 interferes with the road surface, the undercover 20 allows the bottom flat part 21 to move upward via deformation of the deformable member, which couples the front end portion of the undercover to the fixed frame. Consequently, it is possible to suppress deformation and damage of the undercover 20 and portions around the undercover 20.

### [Still another embodiment]

In the vehicle 1 of the above-mentioned embodiment, as shown in FIG. 1, the pair of left and right deflectors 14 are respectively disposed directly in front of the pair of front wheels 11. However, the present invention is not limited to such a configuration. As a still another embodiment of the present invention, as shown in FIG. 14, the deflectors 14 may be omitted, and both left and right end portions of the undercover 12 may be caused to extend in the vehicle width direction to cover the front wheels 11 from the front side. With this configuration, even when the deflectors 14 are omitted, the amount of air impinging on the front wheels 11 during traveling is reduced during traveling by the undercover 12 having an increased width, and air impinges straight on the front wheels 11 in the front-rear direction and hence it is possible to reduce kinetic energy loss.

### [Reference Signs List]

- 1: vehicle
- 11: front wheel
- 11a: front end
- 12: undercover
- 12b: rear part (bottom flat part)
- 13: front bumper
- 17: actuator
- 18: perimeter frame
- 19: controller
- 20: undercover
- 21: bottom flat part
- 22: fixed frame
- 23: deformable member

## Claims

1. A vehicle (1) comprising:
a pair of left and right front wheels (11) disposed at opposite end portions of a front part of the vehicle (1) in a vehicle width direction; and
an undercover (12, 20) disposed at a position forward of the pair of left and right front wheels (11) in a front-rear direction of the vehicle (1), and between the pair of left and right front wheels (11) in the vehicle width direction, the undercover (12, 20) being provided to cover a bottom surface of a vehicle body, wherein
the undercover (12, 20) includes a bottom flat part (12b, 21) that is a part extending forward from a rear edge portion (12e) of the undercover (12, 20), a bottom surface (12c) of the bottom flat part (12b, 21) being parallel to a road surface (GR).

2. The vehicle (1) according to claim 1, further comprising:
a front bumper (13) disposed forward of the pair of left and right front wheels (11) and provided at a front end of the vehicle (1) to extend in the vehicle width direction, wherein
the undercover (12) further includes a front part (12a) that is continuous with a front end of the bottom flat part (12b), and that is provided to extend to a vicinity of a front end (13b) of the front bumper (13), and
the front part (12a) of the undercover (12) is formed to have a smooth curved surface such that a bottom surface (12c) of the front part (12a) is gradually displaced upward as the bottom surface (12c) of the front part (12a) approaches the vicinity of the front end (13b) of the front bumper (13) from a position at which the front part (12a) is continuous from the bottom flat part (12b).

3. The vehicle (1) according to claim 2, wherein the smooth curved surface of the front part (12a) has a curvature radius (R1) in a range of 30 mm to 70 mm.

4. The vehicle (1) according to any of the preceding claims, wherein
the front part (12a) of the undercover (12) includes front corner portions (12d) on both sides in the vehicle width direction, the front corner portions (12d) having an arc shape.

5. The vehicle (1) according to claim 4, wherein the front corner portions (12d) have a curvature radius (R2) in a range of 20 mm to 200 mm.

6. The vehicle (1) according to any of the preceding claims, wherein
the vehicle (1) has a configuration that allows at least the bottom flat part (12b, 21) of the undercover (12, 20) to be moved in an up-down direction.

7. The vehicle (1) according to claim 6, further comprising:
a drive part (16, 17) configured to move the undercover (12) upward and downward, wherein
when the undercover (12) is in a deployed state in which the undercover (12) is lowered by the drive part (16, 17), the bottom surface (12c) of the bottom flat part (12b) is parallel to a road surface (GR).

8. The vehicle (1) according to claim 7, further comprising:
a controller (19) configured to acquire vehicle information for the vehicle (1), and to issue a command indicating whether to lift or lower the undercover (12) to the drive part (16, 17) based on the vehicle information acquired.

9. The vehicle (1) according to claim 7 or 8, wherein the drive part comprises an actuator (17) and a link mechanism part (16) that couples the actuator (17) to the undercover (12).

10. The vehicle (1) according to claim 8 or 9, wherein the vehicle information includes at least one of outside air temperature information and vehicle speed information.

11. The vehicle (1) according to claim 10, wherein the controller (19) is configured to issue a command to lower the undercover (12) to the deployed state when an acquired outside air temperature is equal to or more than a predetermined temperature and/or an acquired vehicle speed is equal to or higher than a predetermined speed.

12. The vehicle (1) according to any one of claims 1 to 11, wherein the rear edge portion (12e) of the undercover (12) has a straight shape extending along the vehicle width direction.

13. The vehicle (1) according to any one of claims 1 to 12, further comprising:
a power train undercover (15) disposed rearward of the undercover (12), wherein
a bottom surface (12c) of the undercover (12) at the rear edge portion (12e) is located at a same height position as a bottom surface (15a) of the power train undercover (15).

14. The vehicle (1) according to claim 6, wherein
the undercover (20) further includes a fixed frame (22) and a deformable member (23), the fixed frame (22) being fixed to the bottom surface of the vehicle body, the deformable member (23) being deformable and coupling at least a front end portion (21a) of the bottom flat part (21) to the fixed frame (22), and
the deformable member (23) is made of a material softer than the bottom flat part (21), and is configured to allow the bottom flat part (21) to move upward by deforming when the bottom flat part (21) interferes with a road surface (GR).

15. The vehicle (1) according to claim 14, wherein a rear end portion (21c) of the bottom flat part (21) is fixed to the fixed frame (22), and the deformable member (23) couples a front end portion (21a) and side end portions (21b) of the bottom flat part (21) to the fixed frame (22), such that the bottom flat part (21) is supported in a cantilever state.
